# FASCICULE DE BREVET EUROPEEN

(11) **EP 1 266 211 B1**
(45) Date de publication et mention de la délivrance du brevet: **25.06.2014**
(21) Numéro de dépôt: 01917207.1
(22) Date de dépôt: 21.03.2001
(51) Int. Cl.: G01N 27/447

(54) **DISPOSITIF PERFECTIONNE D'ANALYSE D'ECHANTILLONS PAR ELECTROPHORESE MULTICAPILLAIRE A THERMO-REGULATION SOLIDE/SOLIDE**
VERBESSERTE VORRICHTUNG ZUR PROBENANALYSE DURCH MULTIKAPILLAR-ELEKTROPHORESE MIT FESTKÖRPER/FESTKÖRPER-THERMOREGULIERUNG
IMPROVED DEVICE FOR SAMPLE ANALYSIS BY MULTIPLE CAPILLARY ELECTROPHORESIS WITH SOLID/SOLID THERMAL CONTROL

(30) Priorité: 25.04.2000 FR 0005255
(43) Date de publication de la demande: 18.12.2002
(73) Titulaire: SEBIA, 92130 Issy-Les-Moulineaux (FR)
(72) Inventeur: FEI, Alberto, I-50100 Firenze (IT)
(74) Mandataire: Desaix, Anne
(86) Numéro de dépôt international: PCT/FR2001/000852
(87) Numéro de publication internationale: WO 2001/081909

(56) Documents cités:
- EP-A- 0 386 925
- EP-A- 0 854 362
- WO-A1-01/67080
- WO-A1-98/14773
- US-A- 5 085 757
- US-A- 5 413 686
- US-A- 5 458 761
- US-A- 5 898 493
- US-A- 6 027 627
- LUKKARI P ET AL: "HOME-MADE TEMPERATURE-CONTROL UNIT FOR THE WATERS QUANTA 4000 CAPULLARY ELECTROPHORESIS SYSTEM" JOURNAL OF HIGH RESOLUTION CHROMATOGRAPHY,DE,WILEY VCH, WEINHEIM, vol. 17, no. 9, 1 septembre 1994 (1994-09-01), pages 651-654, XP000478755 ISSN: 0935-6304
- I. KHETERPAL ET AL.: "Capillary array electrophoresis" ANALYTICAL CHEMISTRY NEWS & FEATURES, 1 janvier 1999 (1999-01-01), pages 31A-37A, XP002158046 AMERICAN CHEMICAL SOCIETY. COLUMBUS., US ISSN: 0003-2700

## Description

L'invention concerne le domaine de l'analyse d'échantillons par électrophorèse capillaire multicanaux.

Elle concerne plus particulièrement les dispositifs comprenant, d'une première part une multiplicité de capillaires pour l'analyse en parallèle d'échantillons, d'une seconde part des moyens de réception permettant de loger au moins la partie centrale des capillaires, en dehors de leurs extrémités, et d'une troisième part des moyens de régulation coopérant avec les moyens de réception pour assurer une régulation de la température des capillaires.

Un dispositif de ce type est notamment décrit dans le brevet US 5,045,172. Les capillaires de ce dispositif sont logés dans une enveloppe creuse à l'intérieur de laquelle circule un fluide caloporteur pour la thermorégulation.

Ce mode de régulation de température requiert un circuit hydraulique complexe comportant au moins une pompe, un réservoir de fluide, des moyens d'étanchéité, des moyens de régulation de débit de fluide, ainsi qu'éventuellement Un échangeur de chaleur.

Un tel circuit augmente l'encombrement du dispositif, nécessite une maintenance régulière et perturbe les capillaires du fait des turbulences qui règnent à l'intérieur de l'enveloppe.

Par ailleurs, ce type de régulation par fluide n'est pas satisfaisant en matière de reproductibilité entre capillaires.

D'autre part, le remplacement d'un capillaire défaillant est rendu difficile du fait que tous les capillaires sont logés dans une même enveloppe.

Enfin, ce type de dispositif impose de nombreuses manipulations, notamment des échantillons à analyser, qui interdisent des cadences d'analyse suffisantes pour une utilisation dans un laboratoire de chimie clinique.

D'autres solutions ont été proposées, comme par exemple dans le document US5413686, mais elles n'apportent pas une entière satisfaction.

Le document WO-A-98/14773 décrit un appareil d'électrophorèse capillaire comportant une cartouche équipée de plusieurs capillaires parallèles et d'un élément thermoélectrique de commande de la température de ces capillaires.Le document US-A-5,085,757 décrit un appareil d'électrophorèse capillaire comportant deux plaques thermoconductrices entre lesquelles est monté un capillaire, les plaques étant équipées d'éléments à effet Peltier.

L'invention a donc pour but de résoudre tout ou partie des inconvénients précités.

Elle propose à cet effet un dispositif selon la revendication 1 où les moyens de réception des capillaires comprennent une multiplicité d'unités indépendantes qui enrobent étroitement la partie centrale du capillaire et sont réalisées dans un matériau thermiquement conducteur et électriquement isolant, et d'autre part, les moyens de régulation thermique sont agencés pour assurer un échange de calories avec les unités, par voie solide/solide, de manière à réguler la température des capillaires via ces unités.

On entend ici par « enrober étroitement » le fait que le matériau de l'unité est en contact surfacique avec l'enveloppe externe des capillaires. Par ailleurs, on entend par « voie solide/solide » le fait que l'échange thermique s'effectue par transfert d'une surface solide vers une autre surface solide, et non pas d'une surface solide vers une surface liquide ou gazeuse.

Cela assure une régulation thermique très efficace, et permet de remplacer tout capillaire défectueux indépendamment des autres.

Dans un mode de réalisation avantageux, on prévoit des moyens de liaison formés de parois thermiquement conductrices qui définissent des logements pour recevoir étroitement les unités. Plus préférentiellement encore, ces moyens de liaison sont constitués d'une multiplicité de sous-moyens de liaison indépendants, comportant au moins trois parois sensiblement perpendiculaires entre elles et ménageant une ouverture pour le logement d'une unité, chaque sous-moyen de liaison constituant avec son unité une cartouche indépendante.

L'unité peut être réalisée en résine, par exemple de type STYCAST (marque déposée par la société National Search and Chemical Company). Elle peut être souple ou rigide. Elle peut être formée avant son introduction dans le logement ménagé par les moyens de liaisons, ou bien directement injectée dans ce logement. Par ailleurs, cette unité peut être extractible ou non, selon son mode de réalisation.

Selon une autre caractéristique de l'invention, on prévoit des moyens de détection capables de fournir des informations sur les échantillons qui circulent dans chaque capillaire, en une zone choisie.

Préférentiellement, ces moyens de détection comprennent une source délivrant un rayonnement lumineux à une longueur d'onde choisie, un détecteur de rayonnement lumineux, une multiplicité de premières fibres optiques comprenant chacune une première extrémité recevant le rayonnement lumineux et une seconde extrémité délivrant le rayonnement lumineux au niveau de la zone choisie d'un capillaire, et une multiplicité de secondes fibres optiques comprenant chacune une première extrémité recueillant le rayonnement lumineux issu de la première fibre optique associée, après interaction avec les constituants des échantillons qui circulent dans le capillaire dans la zone choisie, et une seconde extrémité délivrant au détecteur ce rayonnement lumineux ayant interagi.

Un tel détecteur pourra être avantageusement réalisé sous la forme d'un dispositif à couplage de charge (CCD), comportant une multiplicité d'éléments de détection couplés chacun à la seconde extrémité d'une seconde fibre optique. On entend ici par « élément » un ou plusieurs pixels de détection. La détection s'effectue à l'aide d'un détecteur unique, de façon simultanée sur les différents capillaires, si bien que le coefficient de réponse du détecteur est sensiblement constant quel que soit le capillaire, permettant ainsi d'améliorer notablement la reproductibilité de l'analyse d'un capillaire à l'autre.

De façon préférentielle, les capillaires comprennent, au niveau de leur zone choisie, une section interne transversale de plus grande surface que celle de leurs autres parties. Cela peut être obtenu en utilisant soit des capillaires couplés, de dimensions différentes, soit des capillaires « à bulle », du type de celui décrit dans le brevet US 5061361 et commercialisé par la société Agilent Technologies. De la sorte, le trajet optique de l'onde lumineuse dans le capillaire est allongé, ce qui permet d'améliorer notablement la sensibilité de la détection.

Selon encore une autre caractéristique facultative de l'invention, on prévoit des premier et second réservoirs équipés chacun d'une unique première ou seconde électrode et capables de recevoir respectivement les premières et secondes extrémités des capillaires, ainsi que des moyens d'alimentation électrique haute tension permettant d'instaurer une différence de potentiel choisie entre les première et seconde électrodes. Toutes les premières extrémités des capillaires sont ainsi placées sensiblement à une même profondeur dans le fluide d'analyse, et la répartition du champ électrique sur les extrémités est homogène et sensiblement symétrique, ce qui permet d'améliorer encore la reproductibilité des analyses.

Préférentiellement, on prévoit des moyens capables d'instaurer une différence de pression choisie, positive (surpression) ou négative (dépression), entre les premier et second réservoirs, de sorte que la circulation (généralement d'un liquide, mais il pourrait s'agir d'un gaz, par exemple pour déboucher un capillaire) puisse s'effectuer du premier réservoir vers le second réservoir, et inversement. Cela permet un nettoyage des capillaires sous pression, de préférence à contre-courant, et par conséquent une réduction notable de la durée de nettoyage des capillaires, couplée à une amélioration de la qualité de ce nettoyage.

L'invention concerne également un procédé d'analyse d'échantillons par électrophorèse capillaire utilisant le dispositif revendiqué, qui comprend au moins les étapes suivantes :
* introduire des échantillons dans une multiplicité de capillaires présentant chacun une partie centrale incorporée étroitement dans une unité indépendante réalisée dans un matériau thermiquement conducteur et électriquement isolant,
* appliquer une différence de potentiel choisie entre les extrémités opposées des capillaires, pour séparer les constituants des échantillons, tout en régulant la température des capillaires par échange de calories, par voie solide/solide, entre les unités et des moyens de régulation, de préférence de type Peltier, et
* détecter les constituants en une zone choisie des capillaires.

D'autres caractéristiques et avantages de l'invention apparaîtront à l'examen de la description détaillée ci-après, et des dessins annexés, sur lesquels :
- la figure 1 est une vue éclatée d'une partie d'une cartouche à capillaire selon l'invention,
- la figure 2 est une vue en perspective d'une cartouche complète,
- la figure 3 est une vue en perspective d'un bloc de cartouches, avant installation dans un dispositif selon l'invention,
- la figure 4 est une vue en coupe transversale du bloc de cartouches de la figure 3, après installation dans un dispositif selon l'invention,
- la figure 5 est une vue en coupe transversale de la partie du dispositif selon l'invention assurant le couplage entre un capillaire et les moyens de détection,
- les figures 6A et 6B sont des schémas illustrant respectivement le couplage entre les premières fibres optiques de détection et la source de lumière et le couplage entre les secondes fibres optiques de détection et le capteur,
- la figure 7 détaille, schématiquement le couplage entre une seconde fibre optique et un élément de détection du capteur,
- la figure 8 illustre, dans une vue de dessus, une partie du dispositif selon l'invention, dans la phase d'analyse des échantillons,
- la figure 9 illustre, dans une vue de dessus, le dispositif de la figure 8, dans la phase d'introduction des échantillons dans les capillaires,
- la figure 10 illustre, dans une vue de côté, une partie du dispositif selon l'invention, dans la phase de transfert de la cuve amont de la première position de repos vers la position d'analyse, et
- la figure 11 est une vue de côté illustrant la partie du dispositif de la figure 10, notamment dans les phases de transfert d'échantillons d'un tube vers une cupule, et de nettoyage/remplissage de la cuve amont.

Les dessins annexés sont, pour l'essentiel, de caractère certain. En conséquence, ils pourront non seulement servir à compléter l'invention, mais aussi contribuer à sa définition, le cas échéant.

L'invention concerne un dispositif d'analyse (ou traitement) d'échantillons par électrophorèse multicapillaire. On entend ici par "multicapillaire" le fait que l'on place en parallèle au moins deux capillaires pour analyser sensiblement simultanément au moins deux échantillons. Dans ce qui suit, on décrira, à titre d'exemple, un dispositif d'électrophorèse capable d'analyser simultanément huit échantillons à l'aide de huit capillaires. Bien entendu, l'invention ne se limite pas à ce seul exemple de réalisation.

L'électrophorèse capillaire est une technique bien connue de l'homme de l'art. Elle consiste à faire migrer à l'intérieur d'un capillaire, contenant par exemple une solution tampon appropriée, les différentes molécules qui constituent un échantillon à analyser. Pour ce faire, le capillaire 1-i (dans cet exemple i = 1 à 8) comporte deux extrémités opposées 2 et 3 qui sont placées dans des milieux liquides (solution tampon) portés à des potentiels électriques différents, après introduction de l'échantillon dans la première extrémité 2. Les différences de potentiel électrique (ou tensions) peuvent varier entre environ quelques dizaines de volts et quelques centaines de milliers de volts, et plus préférentiellement entre environ 2000 volts et 30000 volts.

Sous l'effet du champ électrique généré, les molécules de l'échantillon, qui ont été préalablement introduites par la première extrémité 2 (ou extrémité amont) du capillaire 1-i, vont migrer à l'intérieur dudit capillaire 1 selon des vitesses différentes en fonction, notamment, de leurs rapports charge/masse respectifs, de la nature de la solution tampon utilisée (pH, conductivité, etc) et de la valeur du champ électrique. Parvenues à proximité de la seconde extrémité 3 (ou extrémité aval), les différentes molécules ainsi séparées, sont analysées (ou détectées) en une zone choisie 4 à l'aide de moyens de détection qui seront décrits plus loin.

Malheureusement, ce champ électrique provoque, également, un échauffement du capillaire par effet Joule. Des températures de 70°C peuvent ainsi être atteintes au niveau des capillaires, ce qui affecte, notamment, la stabilité de l'échantillon, la viscosité des solutions tampons utilisées, les équilibres chimiques, les pH et les temps de migration respectifs des différentes molécules de l'échantillon.

Pour remédier à cet inconvénient, l'invention propose un dispositif d'analyse dans lequel chaque capillaire 1-i est régulé en température par un échange de calories par voie solide/solide, et préférentiellement par effet Peltier.

Pour ce faire, on prévoit des moyens de réception comportant au moins des unités 5-i indépendantes les unes des autres et réalisées dans un matériau thermiquement conducteur et électriquement isolant. Chaque unité 5-i enrobe la partie centrale 7 du capillaire 1-i de façon étroite, c'est-à-dire de manière à être en contact surfacique (« solide ») avec cette partie centrale du capillaire. Seules les parties de détection 4 et d'extrémité amont 2 et aval 3 du capillaire 1 sont libres, c'est-à-dire non englobées (ou intégrées) dans l'unité 5-i.

Préférentiellement, les moyens de réception comportant également des moyens de liaison 6-i constitués par des parois 8 thermiquement conductrices, qui définissent entre elles une multiplicité de logements 63 (ici au nombre de huit) destinés à recevoir chacun une unité 5-i, de façon étroite (selon la définition donnée ci-avant). Un contact surfacique (« solide ») est donc établi entre les parois 8 constituant les moyens de liaison 6 et les unités 5-i qui intègrent les capillaires 1-i.

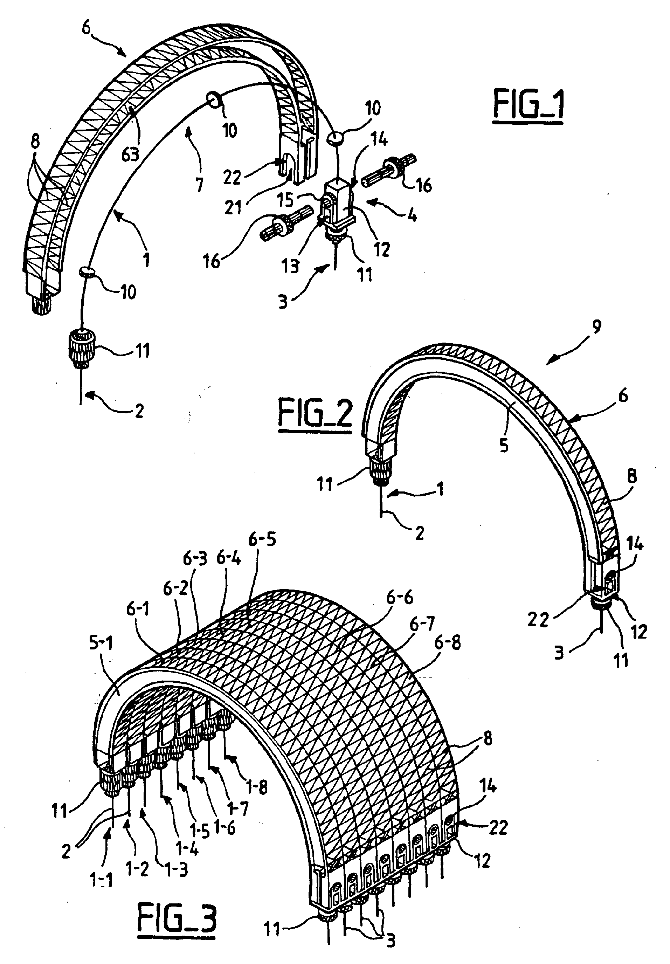

Dans l'exemple illustré sur les figures 1 à 4, les moyens de liaison 6 et les unités 5-i, qui intègrent les différents capillaires 1-i, constituent une multiplicité (ici égale à huit) de cartouches 9-i indépendantes les unes des autres. Plus précisément, chaque cartouche 9-i est ici préférentiellement constituée d'une unité 5-i et de trois parois 8, sensiblement perpendiculaires entre elles de manière à ménager l'ouverture 63 pour le logement de l'unité.

Lorsque les moyens de réception ne comprennent que des unités 5-i, chaque unité constitue avec le capillaire qu'elle englobe une cartouche.

De préférence, les unités 5-i sont réalisées dans un matériau en résine, souple ou rigide. Il pourra s'agir, par exemple, d'un matériau de type Stycast (marque déposée par la société National Search and Chemical Company), celui-ci offrant une thermoconduction élevée. Mais, d'autres matériaux thermoconducteurs peuvent être envisagés.

L'unité 5-i peut être réalisée avant d'être installée à l'intérieur des parois 8 qui constituent, dans l'exemple illustré, les moyens de liaison 6.

Mais, comme illustré sur les figures 1 à 3, cette unité 5-i peut également être formée directement à l'intérieur des moyens de liaison 6-i, par exemple par injection de matière, et après positionnement du capillaire1-i. Dans ce cas, pour que le capillaire 1-i puisse être noyé dans l'unité 5 (ou totalement intégré), il est avantageux qu'il supporte des entretoises 10, sensiblement aux dimensions du logement 63 délimité par les parois 8. Ainsi, une fois le capillaire installé à l'intérieur du logement 63, il n'y a plus qu'à injecter la résine pour constituer l'unité 5.

Les cartouches présentent, de préférence, une forme cintrée de manière à réduire l'encombrement et à permettre un positionnement sensiblement vertical des extrémités des capillaires.

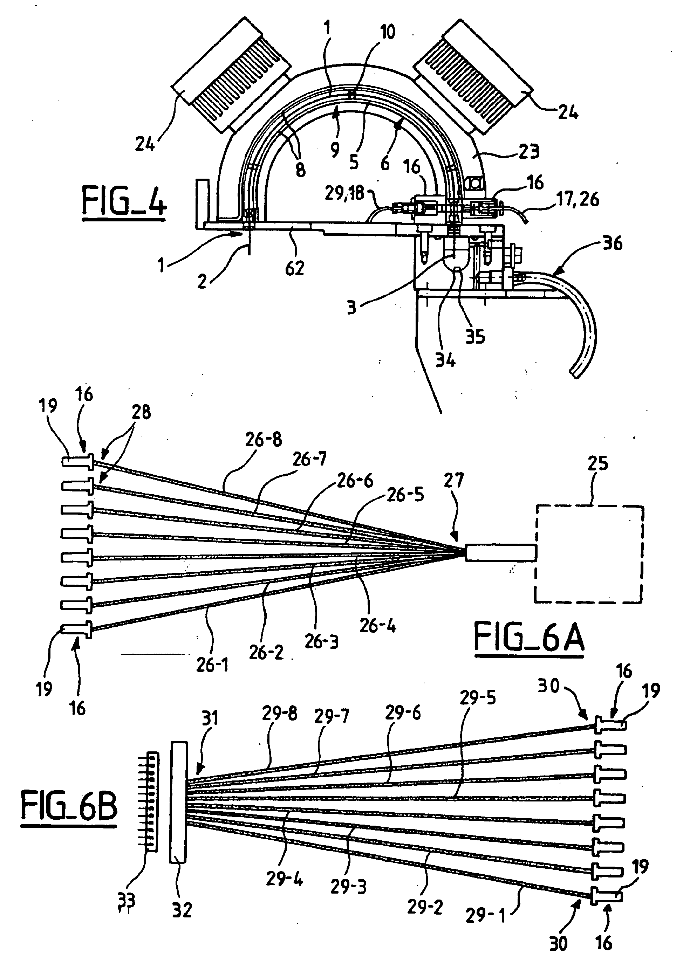

Préférentiellement, chaque extrémité amont 2 et aval 3 de capillaire 1 est munie d'un embout 11 permettant son immobilisation relativement à une plaque de support 62 (voir figure 4). Bien entendu, les embouts placés aux deux extrémités 2 et 3 peuvent être différents.

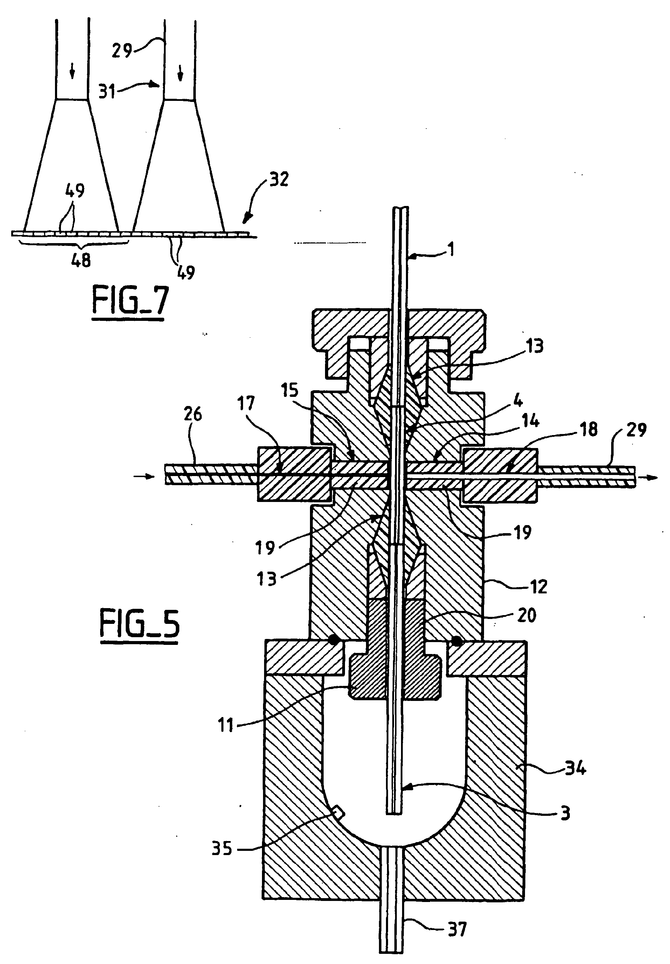

Egalement de préférence, l'intérieur de chaque capillaire 1, dans lequel circulent les fluides et échantillons, présente au niveau de la zone choisie de détection 4 une section transversale de plus grande surface (voir figure 5) que celle des parties en dehors de cette zone. Par exemple, lorsque le capillaire est de forme cylindrique circulaire, le diamètre interne de sa partie évidée, dans la zone choisie 4, est supérieur à son diamètre interne dans les autres parties 2, 3 et 7. Cela permet avantageusement d'augmenter le trajet optique du rayonnement lumineux utilisé par les moyens de détection pour analyser les molécules séparées au niveau de la zone choisie 4. Bien entendu, on pourrait utiliser des capillaires de diamètre interne constant, y compris dans la zone de détection 4.

Le diamètre interne des capillaires est compris entre environ 1 µm et environ 200µm, et de préférence entre environ 20µm et environ 100µm. Il est encore plus préférentiellement égal à environ 25µm.

Pour conférer aux capillaires 1-i une certaine flexibilité sans les casser, ceux-ci sont classiquement recouverts d'un revêtement en polyimide. Ce matériau absorbant les rayonnements lumineux, il doit .,être retiré au niveau de la zone de détection choisie.

Par ailleurs, il est particulièrement avantageux que chaque capillaire soit muni au niveau de la zone choisie 4 d'un embout due couplage 12 permettant l'immobilisation d'une partie des moyens de détection, par exemple les extrémités de fibres optiques dans lesquelles circulent les rayonnement lumineux, de part et d'autre de la zone choisie 4.

Cet embout de couplage 12 est réalisé, de préférence, sous la forme d'un bloc usiné, ou moulé, dans lequel sont formés un premier logement traversant 13 permettant l'introduction de l'extrémité aval 3 et de la zone choisie 4 du capillaire 1, et de second 14 et troisième 15 logements, sensiblement perpendiculaires au premier logement 13 et débouchant dans celui-ci, destinés respectivement à recevoir les embouts 16 placés aux extrémités des fibres optiques amont 26 et aval 29 des moyens de détection.

Dans le mode de réalisation illustré sur les figures 1 à 5, les second 14 et troisième 15 logements communiquent avec le premier logement 13 au niveau de la zone choisie 4, et sont placés sensiblement en regard l'un de l'autre. Les dimensions de ces second 14 et troisième 15 logements formés dans les blocs de couplage 12 sont homologues à celles des parties terminales 19 des embouts 16. Par ailleurs, la partie du premier logement 13 par laquelle débouche la partie d'extrémité aval 3 du capillaire 1, présente des dimensions homologues à celles de la partie d'extrémité 20 de l'embout 11. Le mode de réalisation du bloc de couplage 12 illustré sur la figure 5 est une variante de celui illustré sur la figure 1.

Préférentiellement, les parois 8 de chaque cartouche 9-i définissent, au niveau de l'extrémité par laquelle débouche l'extrémité aval 3 du capillaire 1-i, un logement 21 destiné à immobiliser une partie au moins du bloc de couplage 12 relativement à l'ensemble de la cartouche. Ce logement 21 communique avec l'extérieur grâce à des lumières 22 destinées au passage des embouts 16.

Bien entendu, lorsque la cartouche 9 n'est constituée que d'une unité 5 avec son capillaire 1, le bloc de couplage 12 est emmanché à l'extrémité de l'unité 5.

Les différentes cartouches 9-i (dans cet exemple i = 1 à 8), équipée d'un bloc de couplage 12, sont immobilisées, de préférence, les unes à côté des autres sur le support 62. Les embouts 16 des extrémités des fibres optiques 26 et 29 sont ensuite introduits dans les second 14 et troisième 15 logements des blocs de couplage 12.

Selon l'invention, comme illustré sur la figure 4, on prévoit au-dessus des cartouches 9-i, et au contact surfacique de celles-ci, un capot 23 thermiquement conducteur, par exemple en aluminium ou alumine. Ce capot 23 permet d'immobiliser deux modules (ou unités) Peltier 24 (de préférence) et de répartir, de façon homogène, le contact thermique entre les modules Peltier 24 et les parois 8. Il sert en quelque sorte d'interface thermique. Leur implantation dans le capot 23 facilite les interventions sur les cartouches 9, lorsque l'une d'entre elles est défectueuse. Il suffit, en effet, d'ôter le capot 23 pour accéder directement aux cartouches 9, et pour remplacer l'une d'entre elles sans intervenir sur les autres.

On se réfère maintenant plus particulièrement aux figures 6A et 6B pour décrire un mode de réalisation préférentiel des moyens de détection d'un dispositif selon l'invention.

Comme le sait l'homme de l'art, de nombreuses méthodes d'analyse optique peuvent être envisagées pour détecter et/ou analyser les différentes molécules séparées dans les capillaires 1.

Préférentiellement, les moyens de détection du dispositif selon l'invention comprennent une source monochromatique constituée d'une lampe délivrant un spectre continu et d'un filtre monochromateur pour sélectionner une longueur d'onde choisie. On peut utiliser, par exemple, une lampe deutérium délivrant un spectre continu entre environ 180 nm et environ 390 nm et un filtre interférentiel sélectionnant un rayonnement lumineux d'une longueur d'onde d'environ 200 nm.

L'acheminement de ce rayonnement lumineux au niveau des zones choisies 4-i s'effectue au moyen des premières fibres optiques amont 26-i. Les premières extrémités 27 de ces fibres optiques amont 26-i sont raccordées à un boîtier 25 dans lequel se trouve implantée la lampe et le filtre monochromateur, tandis que leurs secondes extrémités 28, opposées aux premières extrémités 27, sont munies d'un embout de couplage 16 dont la partie d'extrémité 19 est destinée à être introduite dans le second logement 14 d'un bloc de couplage 12-i.

On prévoit de même, pour collecter les rayonnements lumineux, issus des fibres optiques amont 26-i et ayant interagi avec les molécules circulant à l'intérieur des capillaires 1-i au niveau des zones choisies 4-i, des fibres optiques aval 29-i. La première extrémité 30 de chaque fibre optique aval 29-i est munie d'un embout de couplage 16, dont la partie d'extrémité 19 est destinée à être introduite dans un troisième logement 15 d'un bloc de couplage 12. Les secondes extrémités 31 des fibres optiques aval 29-i, opposées aux premières extrémités 30, sont raccordées à un module de détection 32.

De préférence, ce module de détection 32 est un dispositif à couplage de charge (plus connu sous l'acronyme anglais CCD) comportant au moins autant d'éléments de détection 48 qu'il y a de fibres optiques aval 29 (ici, 8). Comme cela est illustré sur la figure 7, un élément de détection 48-i peut désigner un ou plusieurs pixels de détection 49 (dans l'exemple illustré, chaque élément regroupe dix pixels). En fait, le nombre de pixels 49 associés à un élément 48-i dépend de l'ouverture numérique de la seconde extrémité 31 de la fibre optique aval 29-i et de la distance qui sépare cette extrémité des pixels. De la sorte, il est possible d'effectuer une détection simultanée, avec un même détecteur, sur l'ensemble des capillaires 1-i, qui assure des coefficients de réponse sensiblement constants d'un capillaire à l'autre et par conséquent améliore la reproductivité des mesures (ou analyses).

Egalement de préférence, le diamètre de la partie interne 17 des fibres optiques amont 26 est choisi sensiblement inférieur à celui de la partie interne 18 des fibres optiques aval 29. Le choix des diamètres respectifs dépend de la résolution optique désirée et de la transmission d'énergie désirée entre fibres optiques amont 26 et aval 29.

On pourra, par exemple, utiliser des fibres optiques de type silice/silice. Par ailleurs, le détecteur CCD 32 pourra être celui commercialisé par la société HAMAMATSU sous la référence S5462-256Q.

Ce détecteur CCD 32 est raccordé par une interface 33 au module de commande (non représenté sur les figures) du dispositif selon l'invention, afin de lui transmettre des signaux représentatifs des informations recueillies dans les capillaires.

Avantageusement, on prévoit une fibre optique supplémentaire entre la source et le détecteur CCD pour mesurer les variations d'énergie de la lampe, en vue d'une correction des données d'analyse. Le détecteur CCD 32 comprend par conséquent un élément de détection 48 supplémentaire.

D'autres techniques d'analyse pourraient être utilisées dans le dispositif selon l'invention. Par exemple, on pourrait effectuer une détection par fluorescence laser ou bien une détection électrochimique.

Comme cela est mieux illustré sur les figures 4 et 5, les extrémités aval 3 des capillaires 1 sont destinées à être logées dans un réservoir aval 34, qui contient un liquide (solution tampon) porté à un premier potentiel électrique choisi grâce à une unique électrode 35 couplée à une source d'alimentation électrique haute tension (non représentée) pilotée par le module de commande.

De préférence, les blocs de couplage 12 et la cuve aval 34 sont agencés de manière à être solidarisés, de façon amovible. Plus préférentiellement encore, il est particulièrement avantageux que cette solidarisation assure une étanchéité à l'air, de sorte que le liquide qui se trouve à l'intérieur du réservoir aval 34 puisse être pressurisé à l'aide d'un circuit dé pressurisation 36 (partiellement représenté sur la figure 4). Ainsi, en instaurant dans le réservoir aval 34 une pression différente de celle qui règne au niveau des extrémités amont 2 des capillaires 1-i (placées dans des cupules 50-i ou dans un réservoir amont 38), il est possible de faire circuler un liquide sous pression, soit du réservoir aval 34 vers le réservoir amont 38 (surpression), soit du réservoir amont 38 vers le réservoir aval 34 (dépression). Cela permet de laver (ou rincer) rapidement et efficacement les capillaires après et/ou avant une analyse, ou bien de les remplir avec une solution tampon avant l'introduction des échantillons, mais également d'injecter les échantillons.

Pour permettre l'introduction des liquides nécessaires aux analyses et aux lavages (par exemple une solution tampon et une solution de rinçage de type NaOH de concentration comprise entre environ 0,1 M et 1 M) à l'intérieur du réservoir aval 34, ce dernier comporte avantageusement un conduit 37 alimenté par un module d'alimentation en liquide (non représenté) piloté par le module de commande.

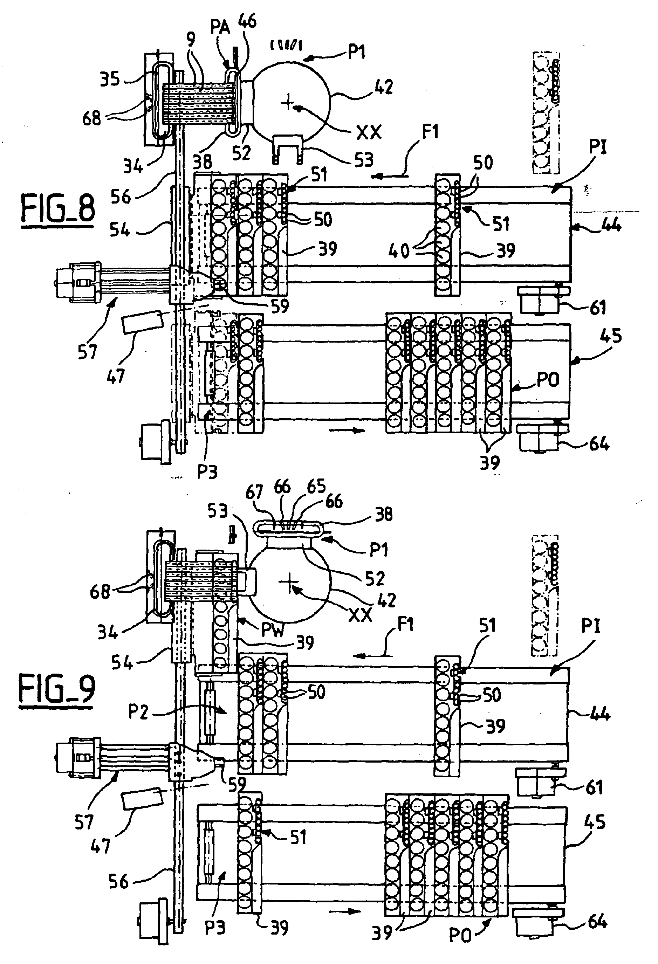

On se réfère maintenant, plus particulièrement, aux figures 8 à 11 pour décrire en détail un mode de réalisation du dispositif selon l'invention.

Les échantillons sont initialement placés dans des tubes 40-ij logés sur un portoir 39-j (dans cet exemple, i = 1 à 8 et j= 1à N). Chaque portoir 39-j comporte en outre une barrette 51-j supportant des cupules 50-ij, de préférence en nombre égal aux tubes 40-ij. Ces cupules 50 sont destinées à recevoir les échantillons après une éventuelle dilution, comme on le verra plus loin, et à fournir les échantillons, éventuellement dilués, aux extrémités amont 2 des capillaires 1-i.

Les extrémités 2 des capillaires sont immobilisées dans une position d'analyse PA. Il faut donc déplacer tour à tour le réservoir amont 38 et la barrette 51 jusqu'à cette position d'analyse PA, pour effectuer les analyses.

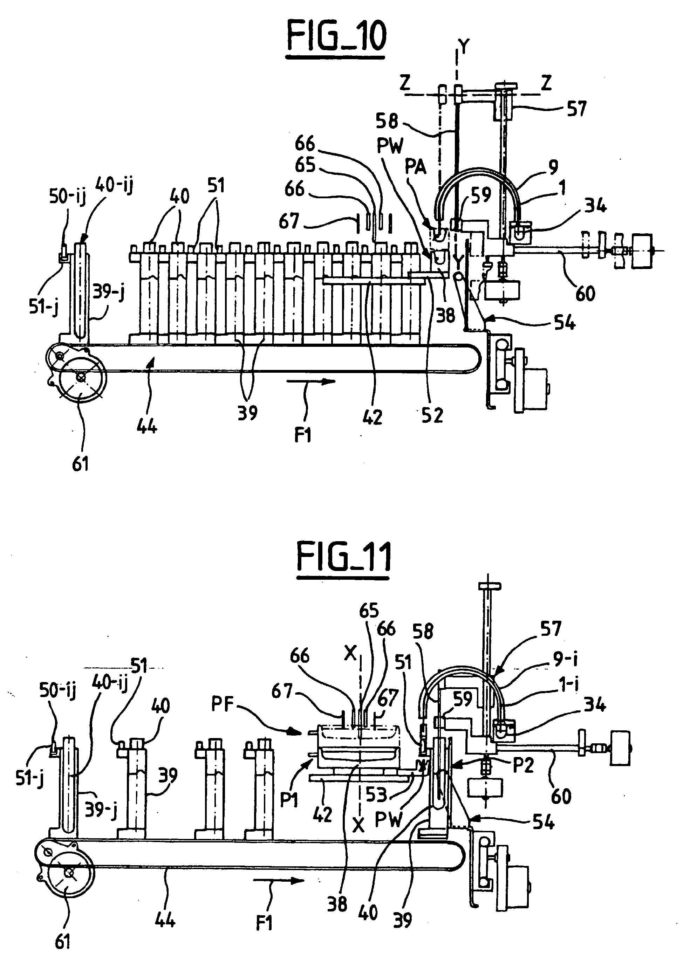

Pour ce faire, le dispositif comprend des moyens de déplacement 42 capables, d'une part, de déplacer le réservoir amont 38 entre une première position de repos P1 (voir la localisation sur les (figures 9 et 11) et une position d'attente PW (voir la localisation sur les figures 9 -11), placée de préférence sensiblement en dessous de la position d'analyse PA, puis de cette position d'attente PW à la position d'analyse PA, et d'autre part de déplacer la barrette 51-j de la position d'attente PW vers la position d'analyse PA.

Préférentiellement, les moyens de déplacement comprennent un carrousel 42 pouvant être entraîné en rotation autour d'un axe XX et déplacé verticalement le long de cet axe XX. Plus précisément, comme cela est mieux illustré sur les figures 8 à 11, le carrousel 42 comprend deux pattes 52 et 53 qui font saillie radialement sensiblement à 90° l'une de l'autre. La rotation du carrousel 42 sur un quart de tour permet de déplacer, avec l'une des pattes 52, le réservoir amont 38 de sa position de repos P1 vers la position d'attente PW. La translation axiale du carrousel 42 (voir figures 10 et 11) permet de déplacer le réservoir amont 38 ou la barrette 51-j de la position d'attente PW vers la position d'analyse PA, et inversement, avec l'une ou l'autre des pattes 52,53.

Dans la position d'analyse PA (matérialisée en pointillés sur les figures 10 et 11), les extrémités amont 2 des capillaire 1-i sont donc logées à l'intérieur du réservoir amont 38.

Par ailleurs, les moyens de déplacement comprennent de préférence un moyen de transfert 54 propre à déplacer le portoir sur lequel se trouve installé la barrette 51-j entre la position d'attente PW et une seconde position de repos P2. Avantageusement, ce moyen de transfert est un chariot 54 monté coulissant sur un rail 56.

Dans cette seconde position P2, on effectue le pipetage et la dilution des échantillons. Le dispositif comprend par conséquent un module de dilution/pipetage 57 (partiellement illustré sur les figures 10 et 11) comprenant une aiguille creuse 58 pouvant être translatée suivant un axe YY sensiblement vertical pour aspirer, par une première extrémité, l'échantillon placé dans l'un des tubes 40-i et le diluer avec un diluant qui arrive, de préférence, par une seconde extrémité de l'aiguille alimentée par un ou plusieurs conduits 60 raccordés à un ou plusieurs réservoirs. Le volume du diluant est contrôlé par le module de commande du dispositif, et il est choisi en fonction du type d'échantillon à analyser. Une fois la dilution effectuée, l'aiguille 58 va placer l'échantillon dilué dans la cupule associée 50-i, grâce à une translation de l'aiguille 58 suivant un axe ZZ sensiblement horizontal (voir figure 10) couplée à une translation du chariot 54 perpendiculairement à cet axe ZZ. Tous ces déplacements sont contrôlés par le module de commande, lequel est programmé à cet effet.

Par ailleurs, afin de permettre un traitement séquentiel d'une multiplicité de portoirs 39-j, le dispositif selon l'invention comprend de préférence des moyens d'approvisionnement qui comportent avantageusement un premier tapis défilant 44 entraîné par un moteur 61 piloté par le module de commande et sur lequel se peuvent être placés plusieurs portoirs 39-j, de préférence de type linéaire. Les portoirs sont introduits les uns à la suite des autres au niveau d'une extrémité amont du premier tapis défilant, qui définit une position d'introduction PI, de telle sorte qu'ils soient avantageusement placés perpendiculairement à leur direction de déplacement (matérialisée par la flèche F1), les uns derrière les autres. Le premier tapis 44 les achemine donc les uns après les autres de la position d'introduction PI vers la seconde position de repos P2 (définie, par exemple, par l'extrémité aval du tapis défilant 44) où ils peuvent être pris en charge par le chariot 54.

D'autre part, le dispositif comprend également, de préférence, des moyens d'évacuation des portoirs après analyse des échantillons. Avantageusement, ces moyens d'évacuation comprennent un second tapis défilant 45 également entraîné par un moteur 64 (éventuellement le même que celui qui entraîne le premier tapis défilant 44), et préférentiellement placé parallèlement au premier tapis défilant 44. Ce second tapis défilant 45 comprend une première extrémité amont qui définit, par exemple, une troisième position de repos P3 pour les portoirs 39 qui reviennent de la position d'analyse PA, et une seconde extrémité aval, opposée à la première et qui définit une position d'extraction des portoirs PO. C'est le chariot 54 qui achemine le portoir 39, après l'analyse de ses échantillons, de la position d'attente PW à la troisième position de repos P3, de sorte qu'il soit évacué par le second tapis 45.

De la sorte, le premier tapis défilant 44 permet d'introduire dans le dispositif les portoirs 39 munis de leurs échantillons à analyser et le second tapis défiant 45 permet de récupérer les portoirs après analyse des échantillons et de les faire ressortir du dispositif. Le dispositif peut être alimenté en portoirs de façon continue dans la mesure où chaque fois qu'un portoir est évacué par le second tapis une place se libère sur le premier tapis pour autoriser l'introduction d'un nouveau portoir muni d'échantillons à analyser.

Le réservoir amont 38 comporte, comme le réservoir aval 34, une unique électrode 46 reliée au module d'alimentation électrique haute tension. Ce module peut ainsi établir, sous contrôle du module de commande du dispositif, une différence de potentiel entre les deux électrodes 35 et 46. Cette différence peut également être adaptée selon les besoins. De préférence, l'électrode amont 46 est placée à un potentiel électrique positif, tandis que l'électrode aval 35 est placée à la masse, mais de nombreuses autres combinaisons peuvent être envisagées.

Avantageusement, le dispositif selon l'invention comporte également plusieurs circuits d'alimentation en liquide (solution tampon et solutions de rinçage et de lavage) qui débouchent, sensiblement au voisinage de la première position de repos P1, et au niveau du conduit 37 du réservoir aval 34.

Comme cela est mieux illustré sur la figure 10, le circuit d'alimentation du réservoir amont 38 comporte un sous-circuit d'extraction de solution tampon raccordé à un conduit 65 et au moins un sous-circuit d'alimentation en liquide de rinçage ou lavage et tampon raccordé à un autre conduit 66 (dans l'exemple illustré, deux sous-circuits de rinçage sont prévus). Par ailleurs, on peut prévoir des détecteurs de niveau de liquide 67 et 68 pour chaque réservoir. L'alimentation du réservoir amont 38 en liquide tampon ou en liquide de rinçage s'effectue de préférence après une translation verticale du carrousel 42, suivant l'axe XX (voir figure 11 où la position d'alimentation PF est matérialisée par des pointillés).

Le dispositif selon l'invention comporte également, de préférence, un module de détection de code barres 47, destiné à permettre au module de commande de s'assurer que le portoir muni de ses tubes, qui se présente, n'a pas déjà été analysé. Ce module de détection peut également lire des codes barres placés sur chaque tube 40-i, de sorte que-chaque échantillon soit associé à un électrophorégramme. Ainsi, en fournissant au module de commande l'identifiant d'un échantillon, on peut accéder immédiatement à son électrophorégramme stocké dans une mémoire.

Préférentiellement, ce module de détection de portoirs 47 est placé sensiblement en regard de la seconde position de repos P2.

On va décrire maintenant un cycle d'analysé d'échantillons, en considérant qu'un portoir 39-j est déjà arrivé au niveau de la seconde position de repos P2.

Dans une première étape, le chariot 54 se saisit du portoir pour le placeur sous le pipeteur/diluteur 57, puis le pipeteur/diluteur extrait l'échantillon placé dans le premier tube 40-1j, le dilue et le replace dilué dans la cupule 50-1j. Puis, il reproduit ses opérations pour chaque échantillon. Pendant ce temps, les huit échantillons du portoir précédent 39-(j-1) sont analysés dans les capillaires 1-i. Cette étape de dilution des échantillons (n) s'effectue pendant l'étape d'analyse des échantillons (n-1).

Dans une seconde étape, une fois l'analyse du précédent portoir terminée, on vidange le réservoir aval 34, tandis que le réservoir amont 38 demeure dans la position d'analyse PA. On remplie alors le réservoir aval 34 avec une solution de lavage (NaOH, par exemple), puis on instaure une différence de pression positive (surpression) entre les réservoirs aval 34 et amont 38, pendant une durée choisie. On vidange de nouveau le réservoir aval 34, puis, de préférence, on le rince, avant de le remplir avec une solution tampon. On instaure ensuite une différence de pression positive entre les réservoirs aval 34 et amont 38, pendant une durée choisie.

Dans une troisième étape, on descend le réservoir amont 38 avec le carrousel 42, de la position d'analyse PA vers la position d'attente PW, puis on entraîne le carrousel 42 en rotation pour placer le réservoir amont 38 dans la première position de repos P1.

Dans une quatrième étape, on déplace le portoir 39-j de la seconde position de repos P2 vers la position d'attente PA, puis on désolidarise la barrette 51-j du portoir 39-j avec l'une des pattes 53. On monte alors la barrette 51-j avec le carrousel 42, de la position d'attente PW vers la position d'analyse PA.

Dans une cinquième étape, on instaure une différence de pression négative (dépression) entre les réservoirs aval 34 et amont 38, pendant une durée choisie, de sorte que les échantillons pénètrent à l'intérieur des capillaires 1-i, sur une courte distance. Puis, on redescend la barrette 51-j de la position d'analyse PA vers la position d'attente PW où l'attend le portoir 39-j, afin de les solidariser. Le chariot 54 translate alors le portoir 39-j de la position d'attente PW vers la troisième position P3, où il est pris en charge par le second tapis défilant 45 pour être évacué. Puis, le chariot 54 vient chercher le portoir 39-(j+1) au niveau de la seconde position de repos P2. Sensiblement simultanément, on monté le réservoir amont 38 vers sa position d'alimentation PF afin de le vidanger, puis de le rincer, et enfin de le remplir avec une solution tampon.

Dans une sixième étape, on redescend le réservoir amont 38 vers la première position de repos P1, puis on entraîne le carrousel 42 en rotation pour placer le réservoir amont 38 au niveau de la position d'attente PW. On monte alors le réservoir amont 38, en translatant le carrousel 42, jusqu'à ce que le réservoir amont 38 soit placé dans la position d'analyse PA.

Dans une septième étape, on instaure une différence de potentiel choisie entre les électrodes amont 46 et aval 35, pour effectuer l'analyse des échantillons du portoir 39-j. Les rayonnements lumineux circulent à l'intérieur des parties utiles 17 des fibres optiques amont 26, traversent les zones choisies 4 des capillaires 1-i en interagissant avec les molécules de l'échantillon qui circulent sous l'effet du champ électrique induit par la différence de potentiel, puis ces rayonnements lumineux sont collectés par les parties utiles 18 des fibres optiques aval 29-i. Ils parviennent alors sur les pixels des éléments CCD de détection 32 où ils sont convertis en signaux électriques qui sont transmis, via l'interface 33, au module de commande. Ces signaux sont alors utilisés par le module de commande pour construire des électrophorégrammes pour chaque échantillon, qui s'affichent, de préférence en direct, sur un moniteur. Puis, les données d'analyse sont stockées en vue d'un traitement ultérieur. Dans le même temps, on applique la première étape au portoir 39-(j+1).

La première étape finie, on réitère les étapes deux à sept pour analyser les échantillons dilués qui viennent d'être placés dans les cupules 50-i(j+1) de la barrette 51-(j+1) du portoir 39-(j+1).

Le dispositif selon l'invention peut être utilisé pour l'analyse capillaire de nombreux échantillons. Mais, il est plus particulièrement destiné à l'analyse des échantillons de nature biologique, comme par exemple, et de façon non limitative, le sang, le sérum, le plasma, l'urine, le liquide céphalo-rachidien, la salive et les larmes.

Le dispositif selon l'invention présente de nombreux avantages et notamment :
- il assure une thermorégulation de type solide/solide particulièrement efficace ;
- il simplifie notablement l'installation électrique du fait que les réservoirs amont et aval ne comportent chacun qu'une unique électrode. De plus, ces électrodes uniques assurent une répartition homogène du champ électrique dans les réservoirs, qui permet d'améliorer la reproductibilité d'un capillaire à l'autre ;
- il simplifie et améliore la détection des molécules des différents échantillons et la reproductibilité de la détection, du fait qu'il présente un détecteur commun pour les différents capillaires ;
- il offre un lavage rapide et de qualité, du fait que ledit lavage s'effectue sous-pression ;
- il offre des cadences d'analyse élevées, en raison de l'automatisation des différentes étapes de dilution, d'analyse et de lavage, ainsi que du mode d'approvisionnement en portoirs (qui est de préférence continu) ;
- il est facile à utiliser et de maintenance aisée du fait qu'il n'y a pas d'intervention humaine sur les échantillons, et que chaque capillaire peut être remplacé sans qu'il soit nécessaire d'intervenir sur les autres capillaires.

L'invention ne se limite pas aux modes de réalisation de dispositif et de procédé décrits ci-avant, seulement à titre d'exemple, mais elle englobe toutes les variantes que pourra envisager l'homme de l'art dans le cadre des revendications ci-après.

Ainsi, on a décrit un dispositif équipé de moyens d'approvisionnement en une multiplicité de portoirs, et de moyens d'évacuation de ces portoirs. Mais, le dispositif pourrait ne pas comprendre de tels moyens, les portoirs étant alors placés et retirés manuellement au niveau de la seconde position.

Par ailleurs, on a décrit un dispositif dans lequel on effectuait une dilution automatisée des échantillons. Mais, les échantillons pourraient être introduits dans le dispositif sous une forme déjà diluée, ou bien ne nécessitant pas de dilution, si bien que l'on pourrait se passer des moyens de pipetage/dilution. Dans ce cas, il est clair que l'on pourrait se passer des portoirs et des tubes, une barrette munie de cupules étant alors suffisante.

D'autre part, on a décrit une analyse d'échantillon à l'aide d'une solution tampon liquide. Mais, cette solution tampon pourrait être visqueuse ou semi-visqueuse.

## Revendications

1. Dispositif d'analyse d'échantillons par électrophorèse, du type comprenant :
* une multiplicité de capillaires (1-i) comportant de première (2) et seconde (3) extrémités opposées,
* des moyens de réception (5,6) agencés pour loger au moins une partie centrale (7) desdits capillaires, hors lesdites extrémités (2,3), et
* des moyens de régulation (24) propres à coopérer avec lesdits moyens de réception (5,6) pour assurer une régulation de température des capillaires (1),
caractérisé en de que lesdits moyens de réception (5,6) comprennent une multiplicité de cartouches (9-i) indépendantes, de façon à pouvoir être remplacées indépendamment les unes des autres, chaque cartouche comportant une unité (5-i) réalisée dans un matériau thermiquement conducteur, électriquement isolant et destiné à enrober étroitement la partie centrale (7) d'un capillaire (1-i), et
en ce que lesdits moyens de régulation sont portés par un capot (23) thermiquement conducteur, situé au-dessus des cartouches, et au contact de celles-ci, de façon à assurer un échange de calories avec l'ensemble des cartouches (9-i) par voie solide/solide, et ainsi à réguler la température desdits capillaires (1-i).

2. Dispositif selon la revendication 1, **caractérisé en ce que** chaque cartouche (9-i) comprend en outre des moyens de liaison (6-i) formés de parois (8) thermiquement conductrices et propres à définir des logements (63) destinés à recevoir chacun, étroitement, l'unité (5-i) de cette cartouche.

3. Dispositif selon la revendication 1 ou 2, **caractérisé en ce que** les cartouches (9-i) ont une forme cintrée.

4. Dispositif selon l'une des revendications 1 à 3, **caractérisé en ce que** lesdites unités (5-i) sont réalisées dans un matériau en résine.

5. Dispositif selon la revendication 4, **caractérisé en ce que** ladite résine est de type STYCAST.

6. Dispositif selon l'une des revendications 1 à 5, **caractérisé en ce qu'**il comprend des moyens de détection (26,29,32) agencés pour fournir des informations sur les échantillons circulant en une zone choisie (4) de chaque capillaire (1-i).

7. Dispositif selon la revendication 6, **caractérisé en ce que** lesdits moyens de détection comprennent :
* une source de lumière (25) propre à délivrer un rayonnement lumineux d'une longueur d'onde choisie,
* un détecteur de rayonnement lumineux (32),
* une multiplicité de premières fibres optiques (26-i) comprenant chacune une première extrémité (27) propre à recevoir ledit rayonnement lumineux et une seconde extrémité (28) propre à délivrer ledit rayonnement lumineux au niveau de la zone choisie (4) d'un capillaire (1-i), et
* une multiplicité de secondes fibres optiques (29-i) comprenant chacune une première extrémité (30) propre à recueillir le rayonnement lumineux issu de la première fibre optique associée (26-i), après interaction avec les constituants de l'échantillon circulant dans ledit capillaire (1-i) en la zone choisie (4), et une seconde extrémité (31) pour délivrer au dit détecteur (32) le rayonnement lumineux ayant interagi.

8. Dispositif selon la revendication 7, **caractérisé en ce que** ledit détecteur (32) est un dispositif à couplage de charge (CCD), comportant une multiplicité d'éléments de détection couplés chacun à une seconde extrémité (31-i) d'une seconde fibre optique (29-i).

9. Dispositif selon l'une des revendications 6 à 8, **caractérisé en ce que** lesdits capillaires (1-i) comprennent, au niveau de la zone choisie (4), une section interne transversale de plus grande surface que celle de leurs autres parties.

10. Dispositif selon l'une des revendications 1 à 9, **caractérisé en ce qu'**il comprend des moyens de couplage (12-i) comportant une multiplicité de premiers logements (13) propres chacun à recevoir ladite zone choisie (4) d'un capillaire (1-i) en vue de son immobilisation en un emplacement d'immobilisation choisi, et une multiplicité de second (14) et troisièmes (15) logements, formés sensiblement perpendiculairement auxdits premiers logements (13) et débouchant dans ceux-ci au niveau de l'emplacement d'immobilisation, chaque second logement (14) étant agencé pour recevoir une seconde extrémité (28) de première fibre optique (26) et chaque troisième logement (15) étant agencé pour recevoir une première extrémité (30) de seconde fibre optique (29).

11. Dispositif selon la revendication 10, **caractérisé en ce que** lesdites secondes extrémités (28) des premières fibres optiques (26) et lesdites premières extrémités (30) des secondes fibres optiques (29) sont munies d'un embout (16) pour le couplage aux seconds et troisièmes logements des moyens de couplage (12), respectivement.

12. Dispositif selon l'une des revendications 10 et 11, **caractérisé en ce que** lesdits moyens de couplage (12) comprennent une multiplicité d'éléments coupleurs (12-i) propres chacun à coupler un capillaire (1-i) à une première (26-i) et une seconde (29-i) fibre optique.

13. Dispositif selon la revendication 12 en combinaison avec l'une des revendications 3 à 5, **caractérisé en ce qu'**une extrémité de la cartouche (9-i), par laquelle débouche la seconde extrémité (3) de capillaire (1-i), est agencée pour recevoir une partie au moins d'un élément coupleur (12-i), de sorte que ledit élément coupleur soit solidarisé à ladite cartouche.

14. Dispositif selon l'une des revendications 1 à 13, **caractérisé en ce qu'**il comprend en outre :
* un premier réservoir (38) muni d'une première électrode (46) et un second réservoir (34) muni d'une seconde électrode (35), lesdits premier et second réservoirs étant propres à recevoir respectivement les premières (2) et secondes (3) extrémités des capillaires (1-i), et
* des moyens d'alimentation électrique propres à instaurer une différence de potentiel choisie entre les première et seconde électrodes.

15. Dispositif selon la revendication 14, **caractérisé en ce qu'**il comprend des moyens (36) propres à instaurer une différence de pression choisie, positive ou négative, entre lesdits premier (38) et second réservoir (34), ladite différence étant choisie de manière à instaurer une circulation du premier réservoir (38) vers le second réservoir (34) ou du second réservoir (34) vers le premier réservoir (38).

16. Dispositif selon l'une des revendications 10 et 11 en combinaison avec l'une des revendications 14 et 15, **caractérisé en ce que** lesdits moyens de couplage (12) sont agencés pour être assemblés, à étanchéité, audit second réservoir (34), de sorte que lesdites secondes extrémités (3) des capillaires (1-i) se trouvent immobilisées relativement à ce second réservoir (34).

17. Dispositif selon l'une des revendications 1 à 16, **caractérisé en ce que** lesdits moyens de régulation comprennent au moins une unité Peltier (24) propre à assurer ledit échange de calories par voie solidelsoüde, et en particulier deux unités.

18. Dispositif selon l'une des revendications 14 à 17, **caractérisé en ce qu'**il comprend des moyens de déplacement (42,54) agencés pour déplacer ledit premier réservoir (38) entre une première position de repos et une position d'analyse (PA) dans laquelle lesdites premières extrémités (2) des capillaires (1-i) sont logées à l'intérieur du premier réservoir (38).

19. Dispositif selon la revendication 18, **caractérisé en ce que** lesdits moyens de déplacement (42,54) sont également agencés pour déplacer un moyen de support (51-j) d'une multiplicité de cupules (50-ij), chaque cupule (50-ij) étant propre à recevoir un échantillon à analyser, éventuellement dilué, entre une position d'attente (PW) et ladite position d'analyse (PA) dans laquelle chaque première extrémité (2) de capillaire (1-i) est logée à l'intérieur d'une cupule (**-i) en vue de l'introduction de l'échantillon qu'il contient dans ledit capillaire (1-i).

20. Dispositif selon la revendication 19, **caractérisé en ce que** la position d'analyse (PA) est située sensiblement au dessus de la position d'attente (PW), et **en ce que** lesdits moyens de déplacement (42,54) comprennent un carrousel (42) propre à être entraîné, d'une part, en rotation entre la première position de repos (P1) et la position d'attente (PW) et, d'autre part, en translation axiale entre la position d'analyse (PA) et la position d'attente (PW).

21. Dispositif selon l'une des revendications 19 et 20, **caractérisé en ce que** lesdits moyens de déplacement (42,56) comprennent en outre un moyen de transfert (54) propre à déplacer ledit moyen de support de cupules (51) entre ladite position d'attente (PW) et une seconde position de repos (P2).

22. Dispositif selon la revendication 21, **caractérisé en ce qu'**il comprend des moyens d'approvisionnement (44) propres à acheminer séquentiellement une pluralité de moyens de support de cupules (51) entre une position d'introduction (PI) et ladite seconde position de repos (P2).

23. Dispositif selon l'une des revendications 21 et 22, **caractérisé en ce que** lesdits moyens de transfert sont agencés pour déplacer chaque moyen de support de cupules (51) entre ladite seconde position de repos (P2) et une troisième position de repos (P3), et **en ce qu'**il comprend des moyens d'évacuation (45) propres à acheminer séquentiellement une pluralité de moyens de support de cupules (51) entre la troisième position de repos (P3) et une position d'évacuation (PO).

24. Dispositif selon l'une des revendications 22 et 23, **caractérisé en ce que** lesdits moyens d'approvisionnement comprennent un premier tapis défilant (44) entraîné par un moteur (61) et propre à assurer l'acheminement entre la position d'introduction (PI) et la seconde position de repos (P2), et **en ce que** lesdits moyens d'évacuation' comprennent un second tapis défilant (45) entraîné par un moteur (64) et propre à assurer l'acheminement entre la troisième position de repos (P3) et la position d'évacuation (PO).

25. Dispositif selon l'une des revendications 22 à 24, **caractérisé en ce que** lesdits moyens d'approvisionnement (44) et lesdits moyens d'évacuation (45) sont agencés pour recevoir au moins deux moyens de support de cupules (51).

26. Dispositif selon l'une des revendications 19 à 25, **caractérisé en ce que** chaque moyen de support de cupules (51) est solidarisé à un portoir (39) comprenant une multiplicité de tubes (40-i), en nombre égal à celui des cupules (50-i), chaque tube (40-i) contenant un échantillon destiné à être transféré dans une cupule (50-i) associée sur le même portoir (39).

27. Dispositif selon la revendication 26, **caractérisé en ce qu'**il comprend des moyens de «pipetage-dilution» (57) agencés pour extraire séquentiellement, au niveau de la seconde position de repos (P2), l'échantillon contenu dans chaque tube (40-i), puis à diluer cet échantillon avec un diluant choisi, et à placer l'échantillon dilué dans la cupule (50-i) associée sur le portoir (39).

28. Dispositif selon l'une des revendications 14 à 27, **caractérisé en ce qu'**il comprend des moyens d'alimentation en liquides propres à alimenter chaque réservoir (34,38) en solution de nettoyage après chaque analyse d'échantillons et à alimenter chaque réservoir (34,38) en solution tampon avant chaque analyse.

29. Procédé d'analyse d'échantillons par électrophorèse capillaire utilisant un dispositif selon l'une des revendications précédentes, **caractérisé en ce qu'**il comprend au moins les étapes suivantes :
* introduire des échantillons dans une multiplicité de capillaires (1-i) présentant chacun une partie centrale (7) incorporée étroitement dans une unité indépendante (5-i) réalisée dans un matériau thermiquement conducteur et électriquement isolant,
* appliquer une différence de potentiel choisie entre les extrémités opposées des capillaires, pour séparer les constituants des échantillons, tout en régulant la température des capillaires (1-i) par échange de calories, par voie solide/solide, entre lesdites unités (5-i) et des moyens de régulation (24), et
* détecter lesdits constituants en une zone choisie (4) desdits capillaires.

30. Procédé selon la revendication 29, **caractérisé en ce que** la régulation s'effectue par effet Peltier.

## Patentansprüche

1. Vorrichtung zur Analyse von Proben durch Elektrophorese, vom Typ enthaltend:
* eine Vielzahl von Kapillaren (1-i) mit einem ersten (2) und einem entgegengesetzten zweiten Ende (3),
* Aufnahmemittel (5, 6), die dazu vorgesehen sind, zumindest einen mittleren Abschnitt (7) der Kapillaren, die Enden (2, 3) ausgenommen, aufzunehmen, und
* Regelungsmittel (24), die dazu geeignet sind, mit den Aufnahmemitteln (5, 6) zusammenzuwirken, um eine Temperaturregelung der Kapillaren (1) zu gewährleisten,
**dadurch gekennzeichnet, dass** die Aufnahniemittel (5, 6) eine Vielzahl von Kartuschen (9-i) aufweisen, die unabhängig sind, so dass sie unabhängig voneinander ersetzt werden können, wobei jede Kartusche eine Einheit (5-i) aufweist, die aus einem wärmeleitenden, elektrisch isolierenden Material ausgebildet ist, das dazu bestimmt ist, den mittleren Abschnitt (7) einer Kapillare (1-i) eng zu umhüllen, und
dass die Regelungsmittel von einer wärmeleitenden Kappe (23) getragen werden, die sich über den Kartuschen befindet und in Kontakt mit diesen steht, so dass ein Wärmeaustausch mit der Gesamtheit von Kartuschen (9-i) über Feststoff/Feststoff erfolgt und somit die Temperatur der Kapillaren (1-i) geregelt wird.

2. Vorrichtung nach Anspruch 1, **dadurch gekennzeichnet, dass** jede Kartusche (9-i) ferner Verbindungsmittel (6-i) aufweist, die aus wärmeleitenden Wänden (8) gebildet sind, die dazu geeignet sind, Aufnahmeausnehmungen (63) zu definieren, die dazu bestimmt sind, jeweils die Einheit (5-i) dieser Kartusche eng aufzunehmen.

3. Vorrichtung nach Anspruch 1 oder 2, **dadurch gekennzeichnet, dass** die Kartuschen (9-i) eine gewölbte Form haben.

4. Vorrichtung nach einem der Ansprüche 1 bis 3, **dadurch gekennzeichnet, dass** die Einheiten (5-i) aus einem Material aus Harz hergestellt sind.

5. Vorrichtung nach Anspruch 4, **dadurch gekennzeichnet, dass** das Harz vom Typ STYCAST ist.

6. Vorrichtung nach einem der Ansprüche 1 bis 5, **dadurch gekennzeichnet, dass** sie Detektionsmittel (26, 29, 32) aufweist, die dazu vorgesehen sind, Informationen über die Proben zu liefern, die in einem ausgewählten Bereich (4) einer jeden Kapillare (1-i) strömen.

7. Vorrichtung nach Anspruch 6, **dadurch gekennzeichnet, dass** die Detektionsmittel aufweisen:
* eine Lichtquelle (25), die dazu geeignet ist, eine Lichtstrahlung mit gewählter Wellenlänge zu erbringen,
* einen Lichtstrahlungsdetektor (32),
* eine Vielzahl von ersten optischen Fasern (26-i), die jeweils ein erstes Ende (27) aufweisen, das dazu geeignet ist, die Lichtstrahlung zu empfangen, sowie ein zweites Ende (28), das dazu geeignet ist, die Lichtstrahlung in Höhe des ausgewählten Bereichs (4) einer Kapillare (1-i) auszusenden, und
* eine Vielzahl von zweiten optischen Fasern (29-i), die jeweils ein erstes Ende (30) aufweisen, das dazu geeignet ist, die Lichtstrahlung aufzufangen, die von der zugeordneten ersten optischen Faser (26-i) stammt, und zwar nach Wechselwirkung mit den Bestandteilen der Probe, die in der Kapillare (1-i) im ausgewählten Bereich (4) strömt, sowie ein zweites Ende (31), um dem Detektor (32) die in Wechselwirkung getretene Lichtstrahlung zu senden.

8. Vorrichtung nach Anspruch 7, **dadurch gekennzeichnet, dass** der Detektor (32) ein ladungsgekoppeltes Speicherelement (CCD) ist, das eine Vielzahl von Detektionselementen aufweist, die jeweils mit einem zweiten Ende (31-i) einer zweiten optischen Faser (29-i) gekoppelt sind.

9. Vorrichtung nach einem der Ansprüche 6 bis 8, **dadurch gekennzeichnet, dass** die Kapillaren (1-i) in Höhe des ausgewählten Bereichs (4) einen inneren Querschnitt aufweisen, der eine größere Fläche als die anderen Abschnitte hat.

10. Vorrichtung nach einem der Ansprüche 1 bis 9, **dadurch gekennzeichnet, dass** sie Kopplungsmittel (12-i) aufweist, die eine Vielzahl von ersten Aufnahmeausnehmungen (13) haben, die dazu geeignet sind, jeweils den ausgewählten Bereich (4) einer Kapillare (1-i) zu deren Festlegung an einer ausgewählten Festlegungsstelle aufzunehmen, sowie eine Vielzahl von zweiten (14) und dritten (15) Aufnahmeausnehmungen, die im Wesentlichen senkrecht zu den ersten Aufnahmeausnehmungen (13) gebildet sind und in diesen im Bereich der Festlegungsstelle ausmünden, wobei jede zweite Aufnahmeausnehmung (14) dazu vorgesehen ist, ein zweites Ende (28) der ersten optischen Faser (26) aufzunehmen und jede dritte Aufnahmeausnehmung (15) dazu vorgesehen ist, ein erstes Ende (30) der zweiten optischen Faser (29) aufzunehmen.

11. Vorrichtung nach Anspruch 10, **dadurch gekennzeichnet, dass** die zweiten Enden (28) der ersten optischen Fasern (26) und die ersten Enden (30) der zweiten optischen Fasern (29) jeweils mit einem Endstück (16) zum Ankoppeln an die zweiten bzw. dritten Aufnahmeausnehmungen der Kopplungsmittel (12) versehen sind.

12. Vorrichtung nach einem der Ansprüche 10 und 11, **dadurch gekennzeichnet, dass** die Kopplungsmittel (12) eine Vielzahl von Koppelelementen (12-i) aufweisen, die dazu geeignet sind, jeweils eine Kapillare (1-i) an eine erste (26-i) bzw. eine zweite (29-i) optische Faser anzukoppeln.

13. Vorrichtung nach Anspruch 12 in Kombination mit einem der Ansprüche 3 bis 5, **dadurch gekennzeichnet, dass** ein Ende der Kartusche (9-i), über welches das zweite Ende (3) der Kapillare (1-i) ausmündet, dazu vorgesehen ist, zumindest einen Teil eines Koppelelements (12-i) aufzunehmen, so dass das Koppelelement fest mit der Kartusche verbunden ist.

14. Vorrichtung nach einem der Ansprüche 1 bis 13, **dadurch gekennzeichnet, dass** sie ferner umfasst:
* einen ersten Behälter (38), der mit einer ersten Elektrode (46) versehen ist, und einen zweiten Behälter (34), der mit einer zweiten Elektrode (35) versehen ist, wobei der erste und der zweite Behälter dazu geeignet sind, die ersten (2) bzw. die zweiten (3) Enden der Kapillaren (1-i) aufzunehmen, und
* Stromversorgungsmittel, die dazu geeignet sind, eine ausgewählte Spannungsdifferenz zwischen der ersten und der zweiten Elektrode anzulegen.

15. Vorrichtung nach Anspruch 14, **dadurch gekennzeichnet, dass** sie Mittel (36) aufweist, die dazu geeignet sind, eine ausgewählte positive bzw. negative Druckdifferenz zwischen dem ersten (38) und dem zweiten Behälter (34) anzulegen, wobei die Differenz so gewählt ist, dass eine Strömung vom ersten Behälter (38) zum zweiten Behälter (34) oder vom zweiten Behälter (34) zum ersten Behälter (38) erfolgt.

16. Vorrichtung nach einem der Ansprüche 10 und 11 in Kombination mit einem der Ansprüche 14 und 15, **dadurch gekennzeichnet, dass** die Kopplungsmittel (12) dazu vorgesehen sind, in dichter Weise mit dem zweiten Behälter (34) zusammengefügt zu werden, so dass die zweiten Enden (3) der Kapillaren (1-i) bezüglich dieses zweiten Behälters (34) festgelegt sind.

17. Vorrichtung nach einem der Ansprüche 1 bis 16, **dadurch gekennzeichnet, dass** die Regelungsmittel zumindest eine Peltier-Einheit (24), die dazu geeignet ist, den Wärmeaustausch über Feststoff/Feststoff zu gewährleisten, und insbesondere zwei Einheiten aufweisen.

18. Vorrichtung nach einem der Ansprüche 14 bis 17, **dadurch gekennzeichnet, dass** sie Verlagerungsmittel (42, 54) aufweist, die dazu vorgesehen sind, den ersten Behälter (38) zwischen einer ersten Ruhestellung und einer Analysestellung (PA) zu verlagern, in welcher die ersten Enden (2) der Kapillaren (1-i) innerhalb des ersten Behälters (38) aufgenommen sind.

19. Vorrichtung nach Anspruch 18, **dadurch gekennzeichnet, dass** die Verlagerungsmittel (42, 54) auch dazu vorgesehen sind, um ein Haltemittel (51-j) für eine Vielzahl von Schälchen (50-ij), bei denen jedes Schälchen (50-ij) dazu geeignet ist, eine zu analysierende, gegebenenfalls verdünnte Probe aufzunehmen, zwischen einer Wartestellung (PW) und der Analysestellung (PA) zu verlagern, in welcher jedes erste Ende (2) der Kapillaren (1-i) innerhalb eines Schälchens (* *-i) zum Einbringen der darin enthaltenen Probe in die Kapillare (1-i) aufgenommen ist.

20. Vorrichtung nach Anspruch 19, **dadurch gekennzeichnet, dass** die Analysestellung (PA) im Wesentlichen über der Wartestellung (PW) liegt und dass die Verlagerungsmittel (42, 54) ein Karussell (42) aufweisen, das dazu geeignet ist, einerseits zwischen der ersten Ruhestellung (P1) und der Wartestellung (PW) rotierend angetrieben zu werden und andererseits zwischen der Analysestellung (PA) und der Wartestellung (PW) translatorisch angetrieben zu werden.

21. Vorrichtung nach einem der Ansprüche 19 und 20, **dadurch gekennzeichnet, dass** die Verlagerungsmittel (42, 56) ferner ein Überführungsmittel (54) aufweisen, das dazu geeignet ist, das Haltemittel (51) für die Schälchen zwischen der Wartestellung (PW) und einer zweiten Ruhestellung (P2) zu verlagern.

22. Vorrichtung nach Anspruch 21, **dadurch gekennzeichnet, dass** sie Zufiihrungsmittel (44) aufweist, die dazu geeignet sind, sequentiell eine Mehrzahl von Haltemitteln (51) für Schälchen zwischen einer Einbringstellung (PI) und der zweiten Ruhestellung (P2) zu befördern.

23. Vorrichtung nach einem der Ansprüche 21 und 22, **dadurch gekennzeichnet, dass** die Überführungsmittel dazu vorgesehen sind, jedes Haltemittel (51) für Schälchen zwischen der zweiten Ruhestellung (P2) und einer dritten Ruhestellung (P3) zu verlagern und dass sie Abführungsmittel (45) aufweist, die dazu geeignet sind, sequentiell eine Mehrzahl von Haltemitteln (51) für Schälchen zwischen der dritten Ruhestellung (P3) und einer Abführungsstellung zu befördern.

24. Vorrichtung nach einem der Ansprüche 22 und 23, **dadurch gekennzeichnet, dass** die Zuführungsmittel ein erstes Laufband (44) aufweisen, das über einen Motor (61) angetrieben wird und dazu geeignet ist, die Beförderung zwischen der Einbringstellung (PI) und der zweiten Ruhestellung (P2) zu gewährleisten, und dass die Abführungsmittel ein zweites Laufband (45) aufweisen, das über einen Motor (64) angetrieben wird und dazu geeignet ist, die Beförderung zwischen der dritten Ruhestellung (P3) und der Abfizhrungsstellung (PO) zu gewährleisten.

25. Vorrichtung nach einem der Ansprüche 22 bis 24, **dadurch gekennzeichnet, dass** die Zuführungsmittel (44) und die Abführungsmittel (45) dazu vorgesehen sind, zumindest zwei Haltemittel (51) für Schälchen aufzunehmen.

26. Vorrichtung nach einem der Ansprüche 19 bis 25, **dadurch gekennzeichnet, dass** jedes Haltemittel (51) für Schälchen fest mit einem Träger verbunden ist, der eine Vielzahl von Röhrchen (40-i) aufweist, die in gleicher Anzahl wie die Schälchen (50-i) vorliegen, wobei jedes Röhrchen (40-i) eine Probe enthält, die dazu bestimmt ist, in ein zugeordnetes Schälchen (50-i) auf dem gleichen Träger (39) überführt zu werden.

27. Vorrichtung nach Anspruch 26, **dadurch gekennzeichnet, dass** sie "Pipettier-Verdünnungs"-Mittel (57) aufweist, die dazu vorgesehen sind, im Bereich der zweiten Ruhestellung (P2) sequentiell die in jedem Röhrchen (40-i) enthaltene Probe zu entnehmen, dann diese Probe mit einem ausgewählten Verdünnungsmittel zu verdünnen und die verdünnte Probe in das zugeordnete Schälchen (50-i) auf dem Träger (39) zu platzieren.

28. Vorrichtung nach einem der Ansprüche 14 bis 27, **dadurch gekennzeichnet, dass** sie Mittel zum Zuführen von Flüssigstoffen aufweist, die dazu geeignet sind, jedem Behälter (34, 38) eine Reinigungslösung nach jeder Probenanalyse zuzuführen und jedem Behälter (34, 38) eine Pufferlösung vor jeder Analyse zuzuführen.

29. Verfahren zum Analysieren von Proben durch Kapillarelektrophorese unter Verwendung einer Vorrichtung nach einem der vorangehenden Ansprüche, **dadurch gekennzeichnet, dass** es zumindest die nachfolgenden Schritte umfasst:
* Einbringen von Proben in eine Vielzahl von Kapillaren (1-i), die jeweils einen mittleren Abschnitt (7) aufweisen, das eng in eine unabhängige Einheit (5-i) eingesetzt ist, die aus einem wärmeleitenden, elektrisch isolierenden Material hergestellt ist,
* Anlegen einer ausgewählten Spannungsdifferenz zwischen den entgegengesetzten Enden der Kapillaren, um die Bestandteile der Proben zu trennen, und dabei Regeln der Temperatur der Kapillaren (1-i) durch Wärmeaustausch über Feststoff/Feststoff zwischen den Einheiten (5-i) und den Regelungsmitteln (24), und
* Detektieren der Bestandteile in einem ausgewählten Bereich (4) der Kapillaren.

30. Verfahren nach Anspruch 29, **dadurch gekennzeichnet, dass** die Regelung durch Peltier-Effekt erfolgt.

## Claims

1. A device for analyzing samples by electrophoresis, the device being of the type comprising:
· a multiplicity of capillaries (1-i) each comprising opposite first and second ends (2, 3);
· receiver means (5, 6) arranged to receive at least a central portion (7) of said capillaries apart from said ends (2, 3); and
· regulator means (24) suitable for co-operating with said receiver means (5, 6) to provide temperature regulation of the capillaries (1);
the device being **characterized in that** said receiver means (5, 6) comprise a multiplicity of independent cartridges (9-i), so that they can be replaced independently one from another, each cartridge having a unit (5-1) made of a material that conducts heat and that is electrically insulating, for the purpose of closely covering the central portion (7) of a capillary (1-i); and
**in that** said regulator means are carried by a thermally insulating cover (23), located above the cartridges, and in contact with the cartridges, so as to ensure heat exchange with the multiplicity of cartridges (9-i) via solid/solid path and thus regulating the temperature of said capillaries (1-i).

2. A device according to claim 1, **characterized in that** each cartridge (9-i) also comprises link means (6-i) formed by heat conducting walls (8) suitable for defining housings (63) each designed to receive the single unit (5-i) of this cartridge closely.

3. A device according to claim 1 or 2, **characterized in that** the cartridges (9-i) have a curved shape.

4. A device according to any one of claims 1 to 3, **characterized in that** said units (5-i) are made of a resin material.

5. A device according to claim 4, **characterized in that** said resin is of the Stycast type.

6. A device according to any one of claims 1 to 5, **characterized in that** it includes detector means (26, 29, 32) arranged to supply information about the samples traveling through a selected zone (4) of each capillary (1-i).

7. A device according to claim 6, **characterized in that** said detector means comprise:
· a light source (25) suitable for delivering light radiation at a selected wavelength;
· a light radiation detector (32);
· a multiplicity of first optical fibers (26-i) each comprising a first end (27) suitable for receiving said light radiation and a second end (28) suitable for delivering said light radiation to the selected zone (4) of a capillary (1-i); and
· a multiplicity of second optical fibers (29-i) each comprising a first end (30) suitable for picking up the light radiation from the associated first optical fiber (26-i) after it has interacted with the components of the sample traveling in said capillary (1-i) through the selected zone (4), and a second end (31) for delivering the light radiation that has interacted to said detector (32).

8. A device according to claim 7, **characterized in that** said detector (32) is a charge-coupled device (CCD) having a multiplicity of detector elements each coupled to a second end (31-i) of a single second optical fiber (29-i) .

9. A device according to any one of claims 6 to 8, **characterized in that** in said selected zone (4) each of said capillaries (1-i) comprises an internal cross-section of area greater than the area of its internal section elsewhere.

10. A device according to any one of claims 1 to 9, **characterized in that** it includes coupling means (12-i) comprising a multiplicity of first housings (13) each suitable for receiving said selected zone (4) of a capillary (1-i) in order to hold it at a selected location, and a multiplicity of second and third housings (14, 15) formed substantially perpendicularly to said first housings (13) and opening out therein at the said location, each second housing (14) being arranged to receive the second end (28) of a first optical fiber (26), and each third housing (16) being arranged to receive the first end (30) of a second optical fiber (29).

11. A device according to claim 10, **characterized in that** said second ends (28) of the first optical fibers (26) and said first ends (30) of the second optical fibers (29) are provided with respective endpieces (16) for coupling to the second and third housings respectively of the coupling means (12).

12. A device according to claim 10 or 11, **characterized in that** said coupling means (12) comprise a multiplicity of coupling element (12-i) each suitable for coupling one capillary (1-i) to a first optical fiber (26-i) and to a second optical fiber (29-i).

13. A device according to claim 12, in combination with any one of claims 3 to 5, **characterized in that** one end of the cartridge (9-i) through which the second end (3) of a capillary (1-i) opens out is arranged to receive at least a portion of a coupling element (12-i) so that said coupling element is secured to said cartridge.

14. A device according to any one of claims 1 to 13, **characterized in that** it further comprises:
· a first reservoir (38) provided with a first electrode (46), and a second reservoir (34) provided with a second electrode (35), said first and second reservoirs being suitable respectively for receiving the first and second ends (2, 3) of the capillaries (1-i); and
· electrical feeder means suitable for establishing a selected potential difference between the first and second electrodes.

15. A device according to claim 14, **characterized in that** it comprises means (36) suitable for establishing a selected positive or negative pressure difference between said first and second reservoirs (38, 34), said pressure difference being selected in such a manner as to establish flow from the first reservoir (38) towards the second reservoir (34) or from the second reservoir (34) towards the first reservoir (38).

16. A device according to claim 10 or 11 in combination with claim 14 or 15, **characterized in that** said coupling means (12) are arranged to be assembled in airtight manner with said reservoir (34) so that said second ends (3) of the capillaries (1-i) are secured relative to said second reservoir (34).

17. A device according to any one of claims 1 to 16, **characterized in that** said regulator means comprise at least one Peltier unit (24) suitable for providing said heat exchange over a solid/solid path, and in particular comprise two such units.

18. A device according to any one of claims 14 to 17, **characterized in that** it includes displacement means (42, 54) arranged to move said first reservoir (38) between a rest first position and an analysis position (PA) in which said first ends (2) of the capillaries (1-i) are received inside the first reservoir (38).

19. A device according to claim 18, **characterized in that** said displacement means (42, 54) are also arranged to cause support means (51-j) for supporting a multiplicity of cups (50-ij) to move, each cup (50-ij) being suitable for receiving a possibly diluted sample to be analyzed, and being movable between a waiting position (PW) and said analysis position (PA) in which each first end (2) of a capillary (1-i) is received inside a cup (50-ij) in order to introduce the sample it contains into said capillary (1-i).

20. A device according to claim 19, **characterized in that** the analysis position (PA) is situated substantially above the waiting position (PW), and **in that** said displacement means (42, 54) comprise a carousel (42) suitable for being driven firstly in rotation between a first rest position (P1) and the waiting position (PW), and secondly in axial translation between the analysis position (PA) and the waiting position (PW).

21. A device according to claim 19 or 20, **characterized in that** said displacement means (42, 54) further comprise transfer means (54) suitable for moving said cup support means (51) between said waiting position (PW) and a second rest position (P2).

22. A device according to claim 21, **characterized in that** it includes supply means (44) suitable for moving a plurality of cup support means (51) sequentially between an introduction position (PI) and said second rest position (P2).

23. A device according to claim 21 or 22, **characterized in that** said transfer means are arranged to displace each cup support means (51) between said second rest position (P2) and a third rest position (P3), and **in that** it includes removal means (45) suitable for moving a plurality of cup support means (51) sequentially between the third rest position (P3) and an removal position (PO).

24. A device according to claim 22 or 23, **characterized in that** said supply means comprise a first conveyor belt (44) driven by a motor (61) and suitable for moving between the introduction position (PI) and the second rest position (P2), and **in that** said removal means comprise a second conveyor belt (45) driven by a motor (64) and suitable for moving between the third rest position (P3) and the removal position (PO).

25. A device according to any one of claims 24 to 22, **characterized in that** said supply means (44) and said removal means (45) are arranged to receive at least two cup support means (51).

26. A device according to any one of claims 19 to 25, **characterized in that** each cup support means (51) is secured to a rack (39) containing a multiplicity of test-tubes (40-i), the number of test-tubes being equal to the number of cups (50-i), each test-tube (40-i) containing a sample to be transferred into an associated cup (50-i) on the same rack (39).

27. A device according to claim 26, **characterized in that** it includes pipette/dilution means (57) arranged to operate sequentially to extract the sample contained in each test-tube (40-i) while in the second rest position (P2), and then to dilute said sample with a selected diluant, and then to place the diluted sample in the associated cup (50-i) on the rack (39).

28. A device according to any one of claims 14 to 27, **characterized in that** it includes liquid feed means suitable for feeding each reservoir (34, 38) with cleaning solution after each sample analysis, and to feed each reservoir (34, 38) with buffer solution prior to each analysis.

29. A method of analyzing samples by capillary electrophoresis using a device according any one of previous claims, the method being **characterized in that** it comprises at least the following steps:
· introducing samples into a multiplicity of capillaries (1-i) each having a central portion (7) closely incorporated in an independent unit (5-i) made of a material that is thermally conductive and electrically insulating;
· applying a selected potential difference between the opposite ends of the capillaries in order to separate the components of the samples, while regulating the temperature of the capillaries (1-i) by heat exchange via a solid/solid path between said units (5-i) and regulator means (24); and
· detecting said components in a selected zone (4) of said capillaries.

30. A method according to claim 29, **characterized in that** regulation is performed by the Peltier effect.
